# EUROPÄISCHE PATENTSCHRIFT

(11) **EP 2 636 577 B1**
(45) Veröffentlichungstag und Bekanntmachung des Hinweises auf die Patenterteilung: **13.05.2015**
(21) Anmeldenummer: 13157824.7
(22) Anmeldetag: 05.03.2013
(51) Int. Cl.: B62D 15/02, G01S 13/72, B60K 37/06, G01S 13/86, G01S 13/93, G01S 7/40, G08G 1/16

(54) **Verfahren zum Warnen des Fahrers eines Kraftfahrzeugs vor einer sich anbahnenden Gefahrensituation infolge eines unbeabsichtigten Driftens auf eine Gegenverkehrsfahrspur**
Method for warning the driver of a motor vehicle about an incipient dangerous situation due to inadvertent drifting into an opposing lane
Procédé destiné à avertir le conducteur d'un véhicule automobile d'une situation de danger suite à un dérapage involontaire sur une voie à contresens

(30) Priorität: 07.03.2012 DE 102012004791
(43) Veröffentlichungstag der Anmeldung: 11.09.2013
(73) Patentinhaber: AUDI AG, 85045 Ingolstadt (DE)
(72) Erfinder: Breu, Alexander, 93495 Weiding (DE)

(56) Entgegenhaltungen:
- EP-A1- 2 302 412
- EP-A2- 0 896 918
- DE-A1-102008 005 999
- JP-A- H08 203 000
- US-A1- 2010 188 200
- US-B1- 6 256 584

## Beschreibung

Die Erfindung betrifft ein Verfahren zum Warnen des Fahrers eines Kraftfahrzeugs vor einer sich anbahnenden Gefahrensituation infolge eines unbeabsichtigten Driftens auf eine Gegenverkehrsfahrspur.

Mitunter kommt es vor, dass der Fahrer eines Kraftfahrzeugs kurzzeitig unaufmerksam ist und den Verkehr nicht beobachtet, beispielsweise wenn er ein im Kraftfahrzeugs verbautes Fahrerassistenzsystem wie beispielsweise eine Navigationssystem bedient, wobei er den Blick auf ein Display und nicht auf die Fahrbahn richtet, oder wenn er einen Radiosender anwählt etc. In solchen Momenten kann es dazu kommen, dass das Fahrzeug unbeabsichtigt zur Seite driftet und sich dabei in Richtung einer benachbarten Gegenverkehrsfahrspur bewegt. Nähert sich auf dieser Gegenverkehrsfahrspur ein Gegenverkehrsfahrzeug, kann es zu einer kritischen Situation kommen.

Zwar sind in modernen Kraftfahrzeugen diverse Fahrerassistenzsysteme verbaut, die auf Umfeldsensoren wie Radarsensoren, Kameras etc. basieren, beispielsweise ein Folgesystem wie ein ACC-System (ACC = Adapted Cruise Control), ein Spurhaltesystem wie beispielsweise ein Heading-Control-System oder ein LDW-System (LDW = Lane Departure Warning) oder Sicherheitssysteme wie beispielsweise ein Kollisionswarnsystem (FCW-System, FCW = Forward Collision Warning). Diese Systeme nutzen zwar die Signale, die von fahrzeugseitig verbauten Sensoren gegeben werden. Sie ermöglichen jedoch stets eine Reaktion auf ein vorausfahrendes Fahrzeug, wenn das System darauf ausgelegt ist, in irgendeiner Weise die relative Position des eigenen Fahrzeugs zu einem vorausfahrenden Fahrzeug zu erfassen und darauf zu reagieren. Zwar ist es aus DE 10 2004 057 060 A1 bekannt, ein auf der eigenen Fahrspur entgegenkommendes Fahrzeug zu erfassen und den Fahrer zu warnen. In einer solchen Situation ist jedoch der Fahrer des eigenen Kraftfahrzeugs üblicherweise nicht unaufmerksam, d.h. dass er selbst aufgrund einer möglichen Unachtsamkeit eine potentielle Gefahrensituation nicht einleitet.

US 2010/188200 A1 ist als nächstliegender Stand der Technik zu sehen und offenbart ein Verfahren zur Warnung eines Fahrers eines Kraftfahrzeugs im Falle eines unbeabsichtigten Abkommens von einer aktuell befahrenen Fahrspur. Gemäß dem Verfahren werden in einem ersten Schritt mittels einer Kameraeinheit Bilddaten gewonnen. In einem folgenden zweiten Schritt werden aus den Bilddaten verschiedene Fahrspurmarkierungen extrahiert. Aus den extrahierten Fahrspurmarkierungen wird in einem folgenden dritten Schritt die der von dem Kraftfahrzeug tatsächlich befahrenen Fahrspur zugehörige Fahrspurmarkierung ermittelt. In einem folgenden vierten Schritt wird ein Abkommen von der befahrenen Fahrspur ermittelt. In einem folgenden fünften Schritt wird ein im Vorfeld des Kraftfahrzeugs befindliches Hindernis ermittelt. In einem folgenden sechsten Schritt wird eine Betätigung des kraftfahrzeugseitigen Lenkrads, mithin ein Lenkvorgang des Fahrers des Kraftfahrzeugs, ermittelt. In einem folgenden siebten Schritt erfolgt eine Bewertung der Notwendigkeit einer Ausgabe einer Warnung und letztlich in dem folgenden achten, sofern eine Ausgabe einer Warnung als notwendig bewertet wird, eine Auswahl einer geeigneten Warnmethode.

Der Erfindung liegt das Problem zugrunde, ein Verfahren anzugeben, das den Fahrer warnt, wenn er unbeabsichtigt in Richtung oder auf eine Gegenverkehrsfahrspur driftet.

Zur Lösung dieses Problems ist ein Verfahren gemäß Anspruch 1 vorgesehen.

Das erfindungsgemäße Verfahren sieht vor, einerseits eine potentielle Kollisionsgefahr zu erfassen, und andererseits zu prüfen, ob Anhaltspunkte für eine Unaufmerksamkeit des Fahrers und damit eine Inaktivität des Fahrers gegeben sind, die Grund zur Annahme geben, dass der Fahrer unbeabsichtigt die potentielle Gefahrensituation herbeigeführt hat.

Hierzu ist es zunächst erforderlich, zu erfassen, ob einerseits überhaupt eine Drift in Richtung der Gegenverkehrsfahrspur gegeben ist und andererseits, ob sich dort überhaupt ein potentielles Kollisionsobjekt befindet. Um ein potentielles Kollisionsobjekt zu erfassen wird zunächst ein in Fahrtrichtung des eigenen Kraftfahrzeugs gerichteter virtueller Fahrschlauch bestimmt. Es wird also eine Art virtueller Korridor ermittelt, der sich aus der momentanen Fahrtrichtung des Fahrzeugs ergibt, und der den prädizierten Fahrtverlauf des eigenen Fahrzeugs wiedergibt. Es wird über diesen Fahrschlauch also prädiziert, wie das eigene Fahrzeug innerhalb der nächsten wenigen Sekunden weiterfahren wird. Sodann wird unter Verwendung einer geeigneten Erfassungssensorik, vorzugsweise frontseitig verbauter Radarsensoren, ermittelt, ob ein entgegenkommendes Fahrzeug im Sensorerfassungsbereich ist, welcher Erfassungsbereich üblicherweise breiter als der Fahrschlauch ist. Nachdem mittels dieser Erfassungssensorik beliebige Umgebungsobjekte erfasst werden, auch solche, die sich nicht bewegen, werden aus der geclusterten Objektliste diejenigen herausgefiltert, die sich bewegen, wobei ggf. auch eine Plausibilitätsprüfung des konkreten Erfassungsortes, der einem Objekt zugeordnet wird, möglich ist. Nachdem der Erfassungsbereich der Sensorik deutlich größer ist als der prädizierte Fahrschlauch wird nun überprüft, ob ein als Gegenverkehrsfahrzeug erkanntes Objekt in den virtuellen Fahrschlauch eindringen wird oder eingedrungen ist, mithin also, ob grundsätzlich eine allgemeine Kollisionsgefahr gegeben ist. In diesem Zusammenhang kann zu jedem als relevant gekennzeichneten Gegenverkehrsobjekt eine Kritikalitätsprüfung vorgenommen werden. Hierzu wird die Abstandsposition und der Bewegungszustand wie zum Beispiel die Relativgeschwindigkeit und die Relativbeschleunigung des relevanten Gegenverkehrsobjekts, die über die Sensorsignale bestimmt werden können, herangezogen. Zusätzlich mit den entsprechenden Zustandsgrößen des eigenen Fahrzeugs werden sodann die Bewegungsgleichungen berechnet und ein virtueller Aufprallzeitpunkt prädiziert, wenn grundsätzlich eine allgemeine Kollisionsgefahr gegeben ist.

Weiterhin ist erforderlich zu prüfen, ob das eigene Kraftfahrzeug überhaupt im Begriff ist, in Richtung der Gegenverkehrsfahrspur zu driften. Hierzu ist zunächst die sichere Differenzierung zwischen der eigenen Fahrspur und einer Gegenverkehrsfahrspur respektive das sichere Erkennen einer Gegenverkehrsfahrspur erforderlich. Zu diesem Zweck wird unter Verwendung insbesondere einer optischen Erfassungseinrichtung wie einer Kamera eine die eigene Fahrspur von der Gegenverkehrsfahrspur trennende Fahrbahnmarkierung ermittelt. Die Ermittlung einer solchen Fahrbahnmarkierung ist zwingende Voraussetzung dafür, dass eine potentielle gefährliche Drift in Richtung des Gegenverkehrs überhaupt möglich ist, da nur dann eine solche Gefahrensituation als plausibel erkannt werden kann, wenn eine eindeutige Fahrspurdifferenzierung möglich ist. Ist eine solche sichere Spurendifferenzierung möglich, wird also eine eindeutig trennende Fahrbahnmarkierung erkannte, so wird überprüft, ob das eigene Kraftfahrzeug aufgrund seiner gegebenen Position und Ausrichtung, die anhand des Gierwinkels des Fahrzeugs respektive der Längsachsenausrichtung erfasst werden kann, eine Relativposition zur Fahrbahnmarkierung aufweist, die nahelegt, dass das Fahrzeug im Begriff ist, sich der Fahrbahnmarkierung zu nähern respektive diese zu überfahren. Das heißt, dass der Lateralversatz (der Abstand der Fahrachse zur Linie) und die Gierwinkeldifferenzen des eigenen Kraftfahrzeugs zu der Fahrbahnmarkierung erkannt werden muss. Idealerweise sollten weitere Markierungsattribute bzw. Linienattribute (die üblichen Fahrbahnmarkierungen sind bekanntlich Linien) wie zum Beispiel der Linientyp (gestrichelt, durchgezogen), Linienkrümmung, Linienvorausschau usw. erkannt werden. Eine Erfassung, ob eine Straße mit Rechts- oder Linksverkehr befahren wird, kann in diesem Zusammenhang über die statische Betrachtung aller erfassten Objekte, die über das Radarsystem erfasst werden, erfolgen, so dass hierüber auch plausibilisiert werden kann, dass es sich bei der erfassten Fahrbahnmarkierung tatsächlich um eine die eigene Fahrspur von einer Gegenverkehrsfahrspur trennende Linie handelt.

Wird anhand der Markierungsinformation erkannt, dass das eigene Fahrzeug aktuell oder im weiteren Verlauf in Begriff ist, diese relevante Fahrspurmarkierung, die auf die entgegenkommende Fahrbahn führt, zu überfahren, ist neben der Erfassung eines potentiellen Gegenverkehrs-Kollisionsobjekts eine weitere essentielle Bedingung für eine mögliche Warnsignalgabe oder einen Funktionseingriff erfüllt.

Sodann ist als drittes Kriterium zu überprüfen, ob eine Inaktivitäts-Situation seitens des Fahrers gegeben ist, ob dieser also unaufmerksam ist und die momentane Ist-Situation nicht aktiv herbeigeführt hat. Hierzu werden Sensorinformationen des eigenen Fahrzeugs hinsichtlich ihres Vorliegens oder Fehlens erfasst, welche Sensorinformationen Hinweise darauf geben, ob ein aktiver Fahr-, insbesondere ein aktiver Lenkbetrieb des Fahrers und damit ein aktives, beabsichtigtes Erreichen der erfassten Relativposition des Fahrzeugs gegeben ist, was die Warnsignalgabe oder einen Fahreingriff ausschließen würde, oder ob eine derartige aktive Handlung respektive Herbeiführung der Situation ausgeschlossen wird, mithin also eine unbeabsichtigte Drift in Richtung der Fahrbahnmarkierung und damit des Gegenverkehrs gegeben ist. Als derartige Sensorinformationen können, worauf nachfolgend noch eingegangen wird, unterschiedlichste Informationen genutzt werden, die von verschiedenartigsten Sensoren respektive Aktoren etc., die im eigenen Fahrzeug verbaut sind, geliefert werden, solange sie geeignet sind, in irgendeiner Weise einen Hinweis auf eine gegebene oder fehlende Fahreraktivität zu geben.

Ist nun auch das dritte Kriterium erfüllt, ist also eine etwaige Inaktivität bzw. Unaufmerksamkeit des Fahrers plausibel, so kann ein Warnsignal ausgegeben werden, sei es optisch, akustisch und/oder haptisch, alternativ oder zusätzlich kann auch ein automatischer Fahrbetriebseingriff erfolgen, wenn dies situationsbedingt erforderlich ist. Grundvoraussetzung ist jedoch, dass die Überprüfungen ergeben haben, dass ein Gegenverkehrsfahrzeug in den virtuellen Fahrschlauch eindringen wird oder eingedrungen ist, mithin also eine potentielle Kollisionsgefahr bei Fortsetzung der Fahrt gegeben ist, als auch, dass das eigene Fahrzeug die Fahrbahnmarkierung überfahren wird oder bereits überfahren hat, so dass eine Kollision sehr wahrscheinlich ist, und wenn schließlich die Sensorinformationen einen aktiven Lenkbetrieb ausschließen. Das erfindungsgemäße Verfahren, das folglich eine Vielzahl von unterschiedlichen Informationen erfasst respektive das Vorliegen diverser Randbedingungen ermittelt und zugrunde legt, bietet die Möglichkeit, den Fahrer in solchen potentiellen Gefahrensituationen zu unterstützen und ihn rechtzeitig zu warnen, so dass er entweder selbst noch aktiv agieren kann, oder, wenn dies nicht mehr möglich ist, durch einen automatischen Systemeingriff eine Gegenaktion zu starten. Die Fahrsicherheit kann hierüber verbessert werden.

In Weiterbildung der Erfindung kann vorgesehen sein, dass der virtuelle Fahrschlauch, gegebenenfalls entfernungsgewichtet, lateral in Richtung der Gegenverkehrsfahrspur versetzt wird. Der virtuelle Fahrschlauch, der über eine beachtliche Länge, beispielsweise ca. 200 Meter (entsprechend der Erfassungsreichweite der Radarsensoren) bestimmt wird, wird gemäß dieser Erfindungsausgestaltung quasi seitlich erweitert, mithin also in die Gegenverkehrsfahrspur hineingezogen. Hierdurch wird also der virtuelle Fahrschlauch etwas breiter aufgespannt. Befindet sich ein entgegenkommendes Objekt für eine bestimmte Zeitdauer innerhalb dieses verbreiterten virtuellen Fahrschlauchs, also des "Gegenverkehrskorridors", so wird es als relevantes Gegenverkehrsobjekt gekennzeichnet.

Gemäß einer zweckmäßigen Weiterbildung der Erfindung kann der Fahrschlauch unter Berücksichtigung von anhand von Sensoren, insbesondere mit der optischen Erfassungseinrichtung erfassten Umfeldinformationen zu stationären Umfeldobjekten, insbesondere Leitplanken oder Fahrspurmarkierungen, bestimmt werden. Gemäß dieser Erfindungsausgestaltung wird folglich der virtuelle Fahrschlauch respektive seine "räumliche Lage" unter Berücksichtigung erfasster Umfeldinformationen zu stationären Objekten ermittelt, das heißt, er wird anhand dieser Informationen gestützt. Dies ist wichtig, da der prädizierte Fahrspurverlauf, z. B. ermittelt über die Gierrate des eigenen Fahrzeugs, und damit die Fahrschlauchermittlung eines "abdriftenden" Fahrzeugs dazu führt, dass eben auch der Fahrschlauch tendenziell mit abdriftet. Durch die Stützung anhand stationärer Umfeldobjektsinformationen wird verhindert, dass der Fahrschlauch respektive der "Gegenverkehrskorridor" zu weit nach außen geschätzt wird und folglich im weiteren Verlauf Gegenverkehrsobjekte fälschlicherweise als relevant oder als nichtrelevant klassifiziert werden. Das heißt, dass der virtuelle Fahrschlauch anhand stationärer Umfeldobjektinformationen quasi korrigiert respektive ausgerichtet wird. Solche stationären Umfeldobjekte können insbesondere Leitplanken sein, aber auch andere Fahrbahnmarkierungen oder Fahrbahnpfosten und Ähnliches, die ohne weiteres insbesondere mit der Vorfeldkamera erfasst werden können. Unter Berücksichtigung solcher Umfeldinformationen zu stationären Objekten ist es auch möglich, zu erfassen, ob das eigene Fahrzeug beispielsweise bei zwei vorhandenen, in die gleiche Richtung laufenden Fahrspuren auf der rechten, folglich von der Gegenverkehrsfahrspur entfernten Spur fährt, da über die Umfeldobjektinformation, beispielsweise die Position einer Leitplanke, stets bekannt ist, dass das eigene Fahrzeug doch deutlich beabstandet von der Gegenverkehrsfahrbahn fährt, mithin also eine potentielle Gefahrensituation nicht unbedingt besteht. Über diese Informationen kann folglich der Fahrschlauch korrigiert respektive begrenzt werden.

Zur Ermittlung, ob eine Kollision des eigenen Fahrzeugs mit dem Gegenverkehrsfahrzeug überhaupt möglich ist, werden zweckmäßigerweise der Abstand zwischen den Fahrzeugen und wenigstens eine die Relativbewegung beider Fahrzeuge zueinander beschreibende Information, insbesondere die Relativgeschwindigkeit und/oder die Relativbeschleunigung, sowie vorhandene, die Eigenbewegung des eigenen Kraftfahrzeugs beschreibende Informationen erfasst und ein möglicher virtueller Aufprallzeitpunkt ermittelt. Die Ermittlung des potentiellen Aufprallzeitpunkts ist erforderlich, um ein Zeitfenster zu erfassen, das zwischen dem momentanen Zeitpunkt und dem virtuellen Aufprallzeitpunkt liegt. Denn eine Warnung oder ein Eingriff ist letztlich nur erforderlich, wenn ein hierüber ermitteltes Zeitfenster eine bestimmte Länge respektive ein bestimmtes Intervall definiert, beispielsweise zwischen 1 - 4 Sekunden oder zwischen 1,5 - 3 Sekunden. Denn nur dann, wenn eine potentielle Kollision innerhalb eines solchen Zeitfensters liegt, ist einerseits eine Warnung und/oder ein Eingriff erforderlich respektive überhaupt noch möglich. Denn eine Warnung bei Ermittlung eines virtuellen Aufprallzeitpunkts in 8 oder 10 Sekunden macht wenig Sinn, da dies eine zulange Zeitspanne ist, und innerhalb dieser Zeitspanne ohne weiteres mit einer aktiven Fahrübernahme durch den Fahrer zu rechnen ist. Ergibt sich jedoch ein virtueller Aufprallzeitpunkt beispielsweise von unter einer Sekunde, so ist mangels potentieller Reaktionszeit zumindest eine Warnung ebenfalls nicht zweckmäßig. Das heißt, dass das Unterschreiten des virtuellen Aufprallzeitpunkts bezogen auf eine applizierbare obere Schwelle wie auch das Überschreiten des virtuellen Aufprallzeitpunkts bezogen auf eine applizierbare untere Schwelle ebenfalls eine notwendige Voraussetzung für eine etwaige Warnung respektive einen Funktionseingriff ist.

Eine Warnung und/oder ein Eingriff erfolgt nur dann, wenn die die eigene Fahrspur von der Gegenverkehrsfahrspur trennende Fahrbahnmarkierung kontinuierlich über eine vorbestimmte, gegebenenfalls adaptierbare Zeitdauer erfasst wird. Es wird folglich geprüft, dass im Vorfeld einer Warnung oder eines Eingriffs für ein definierte Zeitfenster ein plausibler Markierungszustand, also eine hinreichend lange konstante Erfassung der Fahrbahnmarkierung respektive der Trennlinie erfolgte. Ein plausibler Markierungs- oder Linienzustand ist z. B. dadurch gekennzeichnet, dass die Markierung keine Sprünge oder Aussetzer aufweisen darf. Denn nur in diesem Fall kann einerseits eine vorherige Fahrspurtreue und andererseits ein abweichen davon, also ein unbeabsichtigtes Driften erfasst werden.

Ferner kann vorgesehen sein, dass eine Warnung und/oder ein Eingriff nur dann erfolgt, wenn innerhalb einer vorbestimmten oder adaptieren Zeitdauer keine nahe benachbart zu der die eigene Fahrspur von der Gegenverkehrsfahrspur trennende Fahrbahnmarkierung liegende weitere Markierung erfasst wird. Gemäß dieser Ausgestaltung wird also erfasst, ob eine weitere Markierung im Bereich der zuvor erfassten Fahrbahnmarkierung auftaucht, wie dies beispielsweise der Fall ist, wenn eine Einfädelspur abgegrenzt wird, oder wenn der Übergang zu einer weiteren Fahrspur markierungstechnisch angezeigt wird und Ähnliches. Denn in einem solchen Fall ist die Markierungslage unklar, da nicht klar ist, welche der Linie nun konkret eine Gegenverkehrsfahrspur von der eigenen Spur abgrenzt. Das heißt, dass die Markierungslage nicht plausibel ist respektive eine erkannte Fahrspurmarkierung möglicherweise zulässig überfahren werden darf, eben um auf eine weitere abgezweigte Spur zu gelangen. Eine solche weitere Markierung kann ohne weiteres durch die Auswertung der Kamerabilder erfasst werden, indem um die zuvor erfasste Fahrbahnmarkierung ein lateraler Bereich aufgespannt wird, der kontinuierlich ausgewertet wird. Innerhalb der vorbestimmten oder adaptierbaren Zeitdauer darf keine zweite Linie in diesem Bereich auftauchen, nur dann ist eine plausible, eindeutige Linienlage erfasst, die ebenfalls Voraussetzung für einen potentiellen Funktionseingriff ist. Ist diese Voraussetzung nicht gegeben, ist also die Markierungslage unklar, kann, wie natürlich auch bei Erfassung einer Markierungsunterbrechung oder Ähnliches, kein Systembetrieb starten, das System muss von neuem beginnen.

Ferner kann vorgesehen sein, dass der Moment des Überfahrens erfasst wird, wobei eine Warnung und/oder ein Eingriff erst ab diesem Moment möglich ist. Da eine potentielle Kollision ja nur dann erfolgen kann, wenn das eigene Fahrzeug tatsächlich über die spurtrennende Markierung fährt, ist es zweckmäßig, den Warn- oder Eingriffsbetrieb grundsätzlich erst ab diesem Moment zuzulassen, wenngleich natürlich die vorbereitende Situationserfassung schon deutlich vorher beginnt.

Wie bereits beschrieben, ist ein zentrales Kriterium für eine Warnsignalgabe oder einen Eingriff das Vorliegen oder Fehlen einer Sensorinformation, die auf eine gewisse Inaktivität des Fahrers hindeutet. Als eine solche Sensorinformation kann beispielsweise eine Betätigung eines Blinkers und/oder eines Fahr - oder Bremspedals oder eines Lenkrads verwendet werden, die allesamt auf eine aktive Handlung des Fahrers hinweisen. Auch ein etwaiger Lenkwinkel oder Lenkwinkelgradient oder ein Lenkmoment kann als Sensorinformation genutzt werden, da auch diese Informationen ein aktives Handeln, hier also Lenken, des Fahrers implizieren. Auch etwaige Beschleunigungswerte, seien sie positiv oder negativ, deuten einen aktiven Beschleunigungs- oder Bremsbetrieb, mithin also eine Pedalbetätigung an. Auch eine innerhalb eines vorbestimmten, gegebenenfalls adaptierbaren Intervalls liegende Ist-Fahrgeschwindigkeit, eine einen Abstand zu einem vorausfahrenden Fahrzeug anzeigende Zeitlücke und/oder eine mittels einer Kamera erfolgende Fahrerbeobachtung können als entsprechende Informationen verwendet werden. Liegt die Ist-Fahrgeschwindigkeit beispielsweise innerhalb eines erlaubten Geschwindigkeitsbereich von z. B. 50 - 120 km/h, so ist es grundsätzlich möglich, dass der Fahrer unaufmerksam sein kann. Denn insbesondere bei höheren Geschwindigkeiten ist davon auszugehen, dass der Fahrer doch aufmerksam den Verkehr beobachtet. Auch ein etwaiger Abstand zu einem vorausfahrenden Fahrzeug zeigt eine Fahreraufmerksamkeit an. Denn wenn der Fahrer eng hinter einem vorausfahrenden Fahrzeug herfährt, so geschieht dies in der Regel doch bewusst. Ein unmittelbares Indiz für eine etwaige Unaufmerksamkeit ist natürlich eine Innenraumüberwachung, die den Fahrer erfasst, und anhand welcher sofort erkannt werden kann, wenn er sich beispielsweise auf das Display zur Bedienung eines Navigationssystems oder dergleichen konzentriert.

Alle Sensorinformationen tragen letztlich zur Abbildung des Fahrers bzw. seines Fahrverhaltens und seines Zustands bei und dienen der Ermittlung, ob er nachfolgend eine Unterstützung braucht, weil er potentiell unaufmerksam ist und Fahrfehler begehen kann, oder ob er keine Unterstützung braucht, da er aktiv ist und aufmerksam ist. Der Wegfall nur einer einzigen Information, sofern systembedingt mehrere erfasst werden, kann bereits ausreichend sein, um das System grundsätzlich neu zu starten, da dann jeweils von einem aktiven Lenken respektive von einem aktiven Fahrbetrieb ausgegangen werden kann. So insbesondere im Falle einer Blinker- oder Pedalbetätigung oder eines aktiven Lenkens. In solchen Fällen startet der Erfassungsbetrieb, mithin das erfindungsgemäße Verfahren nach Ablauf eines bestimmten Sperrzeitfensters, das wenige Sekunden betragen kann, von neuem.

Als weitere Information, in Abhängigkeit welcher die Gabe einer Warnung oder ein Eingriff erfolgen kann, kann ferner ein anhand einer, insbesondere der optischen Erfassungseinrichtung ermittelter Kurvenradius der Fahrspur, ein zwischen einem definierten Minimum- und Maximumwert liegender Spurweitenwert und/oder die Ist-Geschwindigkeit des Gegenverkehrsfahrzeugs in Bezug auf einen Schwellwert berücksichtigt werden.

Durch die Erfassung des Kurvenradius kann bestimmt werden, ob das System grundsätzlich aktiv sein sollte, ob mithin also überhaupt eine Situation vorliegt, in der das System unterstützend tätig sein kann, oder nicht. Denn bei zu engem Kurvenradius ist eine sichere Situationserfassung nicht möglich. Es kann darüber hinaus ein entsprechender Schwellwertradius definiert werden, der bestimmt, wie stark eine Kurve maximal gekrümmt sein darf, damit das System effektiv arbeiten kann.

Auch die Spurweite sollte in diesem Zusammenhang, insbesondere mit der optischen Erfassungseinrichtung, ermittelt werden. Handelt es sich um eine sehr enge Fahrspur, so ist natürlich viel eher mit einer leichten Drift zur Fahrbahnmarkierung zu rechnen, als bei einer normal breiten Fahrspur. Befindet sich folglich die Spurweite innerhalb des definierten Intervalls, so kann das System grundsätzlich aktiv sein, handelt es sich jedoch um eine extrem schmale Fahrspur, so kann ein Systembetrieb unterdrückt werden.

Auch die Geschwindigkeit des Gegenverkehrs kann als Information berücksichtigt werden, die zum Unterdrücken des Systembetriebs respektive zu einem Neustart führt, nämlich dann, wenn der Gegenverkehr sehr schnell ist und insbesondere sich hieraus eine enge Zeitlücke bis zu einem virtuellen Aufprall ergibt, woraufhin eine entsprechende Anpassung der Warnstrategie möglich ist.

Schließlich können als weitere Information, in Abhängigkeit welcher die Gabe einer Warnung oder ein Eingriff erfolgt, auch Streckeninformationen aus einer mitgeführten oder externen Datenbank, insbesondere eines Navigationssystems, berücksichtigt werden. Anhand dieser Streckeninformationen ist es beispielsweise möglich, die befahrene Straße zu klassifizieren. Wird erfasst, dass sich das eigene Fahrzeug beispielsweise auf einer Autobahn befindet, so ist kein Gegenverkehr möglich, das heißt, dass das erfindungsgemäße Verfahren respektive System nicht aktiv ist. Eine Warnung respektive ein Eingriff ist nur auf Straßen mit potentiellem Gegenverkehr erlaubt. Auch kann bei Straßen mit mehreren Fahrspuren in derselben Richtung, was wiederum aus den Streckeninformationen erfasst werden kann, ein konservativer Ansatz bei der Bestimmung der relevanten Fahrbahnmarkierung gewählt werden, wie auch gegebenenfalls der Linientyp (durchgezogen, gestrichelt) aus den Streckeninformationen erfasst werden kann. Auch kann anhand der Streckeninformationen in Verbindung mit der Fahrzeug-Istposition erfasst werden, ob sich das Fahrzeug momentan im Bereich einer Auf- oder Abfahrt, einer Kreuzung usw. befindet, was in solchen Fällen zu einer Unterdrückung des Systembetriebs führt, da sich solche Bereiche in der Regel durch nicht eindeutige Markierungszustände auszeichnen.

Die Warnung und der Eingriff selbst kann erfindungsgemäß kaskadiert derart erfolgen, dass in einer ersten Stufe eine optische und/oder akustische Warnung, vorzugsweise eine Gongansteuerung und/oder ein Hinweistext im Kombiinstrument oder am Head-up-Display, in einer zweiten Stufe eine haptische Warnung, vorzugsweise eine Lenkradvibration mit abhängig von der Kritikalität der Situation veränderlicher Frequenz und/oder Amplitude, in einer dritten Stufe ein Lenkmoment, das zurück in die Fahrspurmitte gerichtet ist, und in der vierten Stufe ein Bremsmoment, gegebenenfalls radindividuell, mit Tendenz zurück in Richtung Fahrspurmitte in Verbindung mit einer Geschwindigkeitsreduktion gegeben wird. Diese Kaskadierung kann selbstverständlich abhängig von der Kritikalität der Situation auch variiert werden, insbesondere, wenn das Zeitfenster bis zum virtuellen Aufprall bereits sehr eng ist, so dass gegebenenfalls akustisch/optisch/haptisch gewarnt und gleichzeitig ein Lenkmoment und/oder ein Bremsmoment gegeben wird. Das heißt, dass die jeweilige Stufe in Abhängigkeit der erfassten Gefahrensituation gewählt wird, wie die Stufen gegebenenfalls auch kumulativ angewendet werden können.

Neben dem Verfahren betrifft die Erfindung ein Kraftfahrzeug, das zur Durchführung des Verfahrens ausgebildet ist.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung zur Erläuterung des grundlegenden Ablaufs des erfindungsgemäßen Verfahrens,
- Fig. 2: eine Prinzipdarstellung zur Erläuterung der Positionierung des Fahrschlauchs und der Erfassung des Gegenverkehrs,
- Fig. 3: eine Prinzipdarstellung zur Erläuterung der Erfassung der relevanten Fahrbahnmarkierung und einer etwaigen Drift,
- Fig. 4: eine Prinzipdarstellung zur Erläuterung der Erfassung einer Fahrbahnmarkierung und deren Relevanz, und
- Fig. 5: eine Prinzipdarstellung zur Erläuterung einer weiteren Situation betreffend die Erfassung einer relevanten Fahrbahnmarkierung.

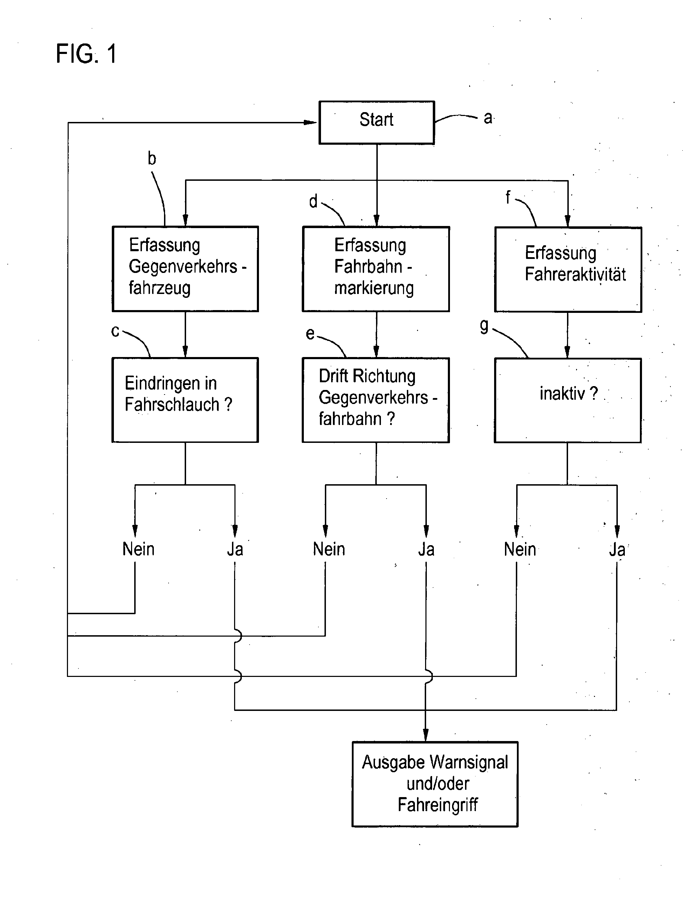

Fig. 1 zeigt in Form eines Flussdiagramms den grundlegenden Ablauf des erfindungsgemäßen Verfahrens.

Im Schritt a wird der Betrieb des Fahrerassistenzsystem - um ein solches handelt es sich vorliegend, das Fahrerassistenzsystem führt das erfindungsgemäße Verfahren durch - gestartet. Sodann beginnen drei unterschiedliche Erfassungsvorgänge, nämlich zum einen die Erfassung eines etwaigen vorhandenen Gegenverkehrsfahrzeugs, daneben die Erfassung einer die eigene Fahrspur von einer Gegenverkehrsfahrspur trennenden relevanten Fahrbahnmarkierung, und schließlich die Erfassung der Fahreraktivität.

Die Erfassung eines etwaigen entgegenkommenden Gegenverkehrsfahrzeugs erfolgt im Schritt b. Hierzu wird wie bereits beschrieben zunächst ein in Fahrtrichtung des eigenen Kraftfahrzeug gerichteter virtueller Fahrschlauch bestimmt, der gegebenenfalls lateral, also in Richtung einer etwaigen Gegenverkehrsfahrbahn erweitert wird. Dieser Fahrschlauch definiert den potentiellen Bewegungskorridor, in dem sich das eigene Fahrzeug zukünftig bewegen wird. Der Fahrschlauch wird aus der Ausrichtung respektive Fahrtrichtung des eigenen Fahrzeugs sowie etwaigen Informationen hinsichtlich Lenkwinkel, Gierwinkel etc. ermittelt. Sodann wird unter Verwendung einer Erfassungssensorik, insbesondere geeigneter Radarsensoren, das Fahrzeugvorfeld erfasst und geprüft, ob sich auf einer Gegenverkehrsfahrspur ein Gegenverkehrsfahrzeug nähert. Ist auch dies erfolgt und wurde ein Gegenverkehrsfahrzeug verifiziert, so wird, siehe Schritt c, überprüft, ob das Gegenverkehrsfahrzeug in den virtuellen Fahrschlauch eingedrungen ist oder unmittelbar eindringen wird. Das Erfassungsergebnis der Schritte b, c kann entweder sein, dass kein Gegenverkehrsfahrzeug erfasst wird und folglich auch kein Eindringen in einen Fahrschlauch ermittelt wird, woraufhin das Verfahren erneut startet, respektive die Schritte b, c erneut angestoßen werden. Für den Fall, dass ein Gegenverkehrsfahrzeug erfasst wird, und dieses auch in den Fahrschlauch eindringt, wird ein positives Überprüfungsergebnis erhalten. Dieses Ergebnis ist das erste Grundkriterium dafür, zu entscheiden, ob es der Ausgabe eines Warnsignals und/oder eines Fahreingriffs bedarf.

Parallel dazu erfolgt, siehe Schritt d, die Erfassung einer relevanten Fahrbahnmarkierung, die die eigene Fahrspur von einer Gegenverkehrsfahrspur, auf der sich ein etwaiges Gegenverkehrsfahrzeug bewegt, definiert trennt. Dies geschieht unter Verwendung einer geeigneten optischen Erfassungseinrichtung wie einer Fahrzeugvorfeldkamera mit geeigneter Bildauswertesoftware, die im Stande ist, Fahrbahnmarkierungen, insbesondere in Form von Linien, zu erfassen. Wird eine solche Fahrbahnmarkierung hinreichend stabil, also für einen definierten langen Zeitraum konstant erfasst, so wird im Schritt e überprüft, ob das eigene Fahrzeug, dessen Relativposition kontinuierlich relativ zur Fahrbahnmarkierung bestimmt wird, sich so verhält, dass es sich dieser Fahrbahnmarkierung nähert, mithin also zu dieser hindriftet und letztlich dabei ist, auf die Gegenverkehrsfahrbahn zu driften. Die Bestimmung der Relativposition des Fahrzeugs zur Fahrbahnmarkierung erfolgt wie beschrieben anhand der eigenen räumlichen Fahrzeugstellung, insbesondere der Ausrichtung der Fahrzeuglängsachse respektive des Gierwinkels etc.

Auch hier kann es zu zwei unterschiedlichen Endergebnissen kommen. Wird entweder keine relevante definierte Fahrbahnmarkierung erfasst, oder wird kein Drift festgestellt, so kehrt das System wieder zum Ausgangspunkt zurück, es wird letztlich neu gestartet bzw. die Schritte d, e beginnen erneut. Steht im Endergebnis eine positive Feststellung, so ist ein weiteres Entscheidungskriterium betreffend die Ausgabe eines Warnsignals und/oder eines Fahreingriffs erfüllt.

Die dritte Erfassungslinie sieht gemäß Schritt f die Erfassung der Fahreraktivität vor. In diesem Überprüfungszug wird geprüft, ob der Fahrer unaufmerksam ist, mithin also eine etwaige im Schritt e festgestellte Drift in Richtung der Gegenverkehrsfahrbahn unbeabsichtigt erfolgt, weil der Fahrer gegebenenfalls abgelenkt ist, oder ob sie absichtlich erfolgt bzw. der Fahrer aktiv ist und die Kontrolle über das Fahrzeug hat. Diese Feststellung erfolgt anhand diverser Sensorinformationen, die über unterschiedliche im Fahrzeug verbaute Sensoren erfasst werden. Als "Sensoren" sind dabei sämtliche Elemente zu verstehen, die in irgendeiner Weise Informationen liefern, die auswertbar sind und es ermöglichen, die Fahreraktivität respektive den Fahrerzustand abzubilden. Insbesondere fallen hierunter die Betätigung des Blinkers oder die Betätigung des Fahr- oder Bremspedals. Denn wenn der Fahrer den Blinker betätigt, so ist das ein eindeutiges Zeichen dafür, dass eine etwaige Drift zur Gegenverkehrsfahrbahn bewusst ist, er also ausscheren oder überholen möchte. Fehlt ein solches Blinksignal, kann dies ein Indiz für eine unbewusste Drift sein. Auch die Betätigung des Fahrpedals oder des Bremspedals zeigt eine aktive Handlung des Fahrers an, das heißt, dass dieser doch aufmerksam ist und den Verkehr beobachtet, mithin also eine etwaige Drift ebenfalls bewusst und kontrolliert erfolgt. Weitere Sensorinformationen können die Betätigung eines Lenkrads respektive der Lenkwinkel oder der Lenkwinkelgradient sein, wie auch ein etwaiges Lenkmoment, also allesamt Informationen, die auf eine bewusste Querführung des Fahrzeugs durch den Fahrer hinweisen. Denn wenn der Fahrer das Lenkrad unmittelbar vor der Erfassung einer etwaigen Drift bewegt hat, so ist es naheliegend, dass er bewusst die Querführung veranlasst hat.

Aber auch andere als unmittelbare Fahrzeugparameter können als Sensorinformationen verwendet werden, insbesondere beispielsweise eine Fahrzeuginnenraumüberwachung mittels einer Innenraumkamera, die exakt erfasst, ob der Fahrer aufmerksam ist respektive wohin er blickt. Wird hiermit erfasst, dass der Fahrer seinen Blick beispielsweise seitlich nach unten auf ein Display oder das Bedientableau richtet, so ist eindeutig, dass er den Verkehr nicht aufmerksam beobachtet, und dass eine etwaige Drift wohl unbeabsichtigt ist.

Insgesamt gehen in diesen Überprüfungsschritt eine Vielzahl an möglichen Informationen ein. Nur wenn diese mehreren Informationen kumulativ indizieren, dass der Fahrer inaktiv ist, ist auch dieses dritte Entscheidungskriterium positiv, das heißt, dass die Grundlage dafür gegeben ist, ein Warnsignal auszugeben oder einen Fahreingriff vorzunehmen. Lässt auch nur eines der mehreren erfassten Sensorsignale, also der überprüften Kriterien den Schluss zu, dass der Fahrer doch aktiv ist, so wird dieser Überprüfungszug negativ entschieden, das System kehrt wiederum zum Start bzw. zum Schritt f zurück.

Die Rückkehr zum Start bedeutet nicht, dass, sollte danach im jeweiligen Verfahrenszug unmittelbar jeweils positiv entschieden werden, auch sofort ein entsprechendes Warnsignal respektive ein Funktionseingriff gegeben werden kann. Denkbar ist es, dass bei negativem Ergebnis in auch nur einem Überprüfungszug zunächst ein gewisses Sperrzeitfenster angestoßen wird, innerhalb welchem - selbst wenn die folgenden Überprüfungen positiv verlaufen - ein Warnsignal respektive ein Funktionseingriff nicht erfolgen darf, eben um ausreichende Systemstabilität zu gewährleisten.

Werden alle drei Überprüfungszüge mit "ja" beschieden, ist einerseits definitiv eine potentielle Gefahrensituation erkannt und ein unbeabsichtigtes Driften festgestellt, wie auch eine Fahrerinaktivität vorliegt. Es kommt dann zur Ausgabe eines Warnsignals und/oder eines Fahreingriffs, wobei die Warn- respektive Eingriffsstrategie auch gestuft ablaufen kann, wie bereits einleitend beschrieben.

Im Rahmen der Signalgabe respektive des Eingriffs kann, zeitlich gesehen, eine gewisse Adaption an den Fahrer stattfinden. Denn wenn sich beispielsweise während der laufenden Fahrt herausstellt, dass der Fahrer sehr aktiv ist, mithin also beispielsweise relativ bewusst stets ziemlich weit links Richtung Fahrbahnmarkierung fährt, oder relativ nahe an das vorausfahrende Fahrzeug auffährt etc., kann eine Adaption dahingehend erfolgen, dass etwaige Signalgaben oder Eingriffe zeitlich gesehen etwas später erfolgen, verglichen mit einem relativ inaktiven Fahrer, der offensichtlich eher einer Unterstützung bedarf.

Auch ist es möglich, dass ein Fahrer entsprechend seiner "Klassifikation fahraktiv/fahrinaktiv" auf einer Landstraßenfahrt mehr oder weniger "Kurven schneiden" kann oder darf, ohne dass es zu einem Funktionseingriff kommt, da dies letztlich seinem Fahrerwunsch respektive seiner Fahrart entspricht. Diese "Sonderparameter" können insbesondere im Rahmen der Erfassung der Fahreraktivität eingehen, aber auch im Bereich der Erfassung der Fahrbahnmarkierung, wo insbesondere Streckeninformationen, die beispielsweise aus einem Speichermedium eines Navigationssystems betreffend die momentan befahrene Strecke abgegriffen werden, eingehen können, und aus welchen beispielsweise Informationen über den Fahrbahnverlauf, insbesondere im Hinblick auf Kurvenradien etc., abgegriffen werden können.

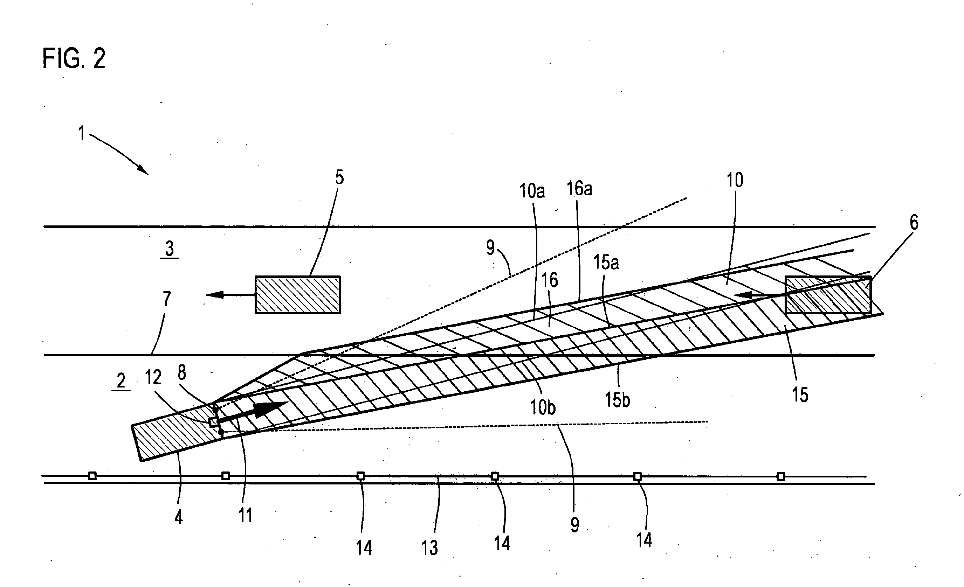

Fig. 2 zeigt eine Prinzipdarstellung zur Erläuterung der Erfassung etwaigen Gegenverkehrs sowie dessen Kollisionsrelevanz. Gezeigt ist eine Fahrbahn 1 mit zwei Fahrspuren 2, 3, wobei die Fahrspur 2 vom eigenen Fahrzeug 4 befahren wird, während auf der Gegenverkehrsfahrspur 3 ein erstes Gegenverkehrsfahrzeug 5 und ein zweites Gegenverkehrsfahrzeug 6 fahren.

Das eigene Fahrzeug 4 fährt nicht parallel zur Fahrspurlängsrichtung, sondern - hier übertrieben dargestellt - leicht schräg, so dass es letztlich in Richtung einer Fahrbahnmarkierung 7, die die eigene Fahrspur 2 von der Gegenverkehrsfahrspur 3 trennt, fährt.

Um etwaigen Gegenverkehr zu erfassen, bedient sich das System verschiedener Sensoren 8, im vorliegenden Fall vorzugsweise Radarsensoren, die das Fahrzeugvorfeld abtasten und etwaige Objekte in ihrem Erfassungsbereich, der durch die gestrichelten Linien 9 dargestellt ist, erfassen. Aus den Sensorsignalen können Informationen über den Abstand zu den Objekten wie auch die Relativgeschwindigkeit etc. ermittelt werden.

Im gezeigten Beispiel befindet sich das Gegenverkehrsfahrzeug 5 außerhalb des Erfassungsbereichs 9, während das Gegenverkehrsfahrzeug 6 grundsätzlich in deren Erfassungsbereich liegt, mithin also detektiert wird. Da es ein bewegendes Objekt ist, kann anhand des zeitlichen Verlaufs der Sensorsignale ein solches sich bewegendes Objekt sicher detektiert werden.

Um nun zu erfassen, ob das Gegenverkehrsobjekt 6 tatsächlich ein potentielles Kollisionsobjekt darstellt, wird systemseitig ein virtueller Fahrschlauch 10 (bildlich begrenzt durch die Linien 10a, 10b) in Fahrtrichtung 11 des Fahrzeugs 4 bestimmt. Dieser prädizierte Fahrschlauch 10 gibt den Bewegungskorridor an, in dem sich das Fahrzeug 4 potentiell zukünftig bewegt. Seine Lage respektive Ausrichtung hängt davon ab, wie die Eigenposition bzw. Längsausrichtung des Fahrzeugs 4 ist, da er von Haus aus parallel respektive in Richtung der Fahrzeuglängsachse ausgerichtet ist.

Dieser "unkorrigierte" Fahrschlauch 10 wird nun bevorzugt "Standzielgewichtet", das heißt, dass seine Lage über Informationen betreffend feststehende Ziele korrigiert wird. Dem liegt die Überlegung zugrunde, dass der prädizierte Fahrspurverlauf eines "abdriftenden" Fahrzeugs dazu führt, dass auch der Fahrschlauch 10 tendenziell abdriftet. Durch eine Korrektur, gestützt auf Informationen betreffend stehende Ziele wird verhindert, dass der Fahrschlauch zu weit nach "außen", also in Richtung der Gegenverkehrsfahrbahn, geschätzt wird und im weiteren Verlauf Gegenverkehrsobjekte fälschlicherweise als relevant oder als nicht relevant klassifiziert werden. Zu diesem Zweck werden, beispielsweise unter Verwendung eines optischen Erfassungsmittels wie einer Kamera 12 und/oder der Umfeldsensorik wie insbesondere dem beachtlich weitreichenden Radar, feststehende Umfeldobjekte wie beispielsweise eine Leitplanke 13 oder Straßenbegrenzungspfosten 14 erfasst. Hierüber kann nun definiert erkannt werden, wie das eigene Fahrzeug hier relativ zu diesen feststehenden Zielen steht, und letztlich wo sich die Gegenverkehrsfahrbahn 3 befindet. Gestützt hierauf kann sodann der Fahrschlauch korrigiert und im gezeigten Beispiel quasi "nach unten gezogen" werden. Der korrigierte Fahrschlauch ist mit 15 angegeben, seitlich ist er über die Linien 15a, 15b berandet. Ersichtlich ist er relativ zum unkorrigierten Fahrschlauch 10 verkippt. Vor allem die Radardaten, anhand welche insbesondere Standziele sehr gut erfasst werden können, sind für die Fahrschlauchkorrektur zweckmäßig, da anhand der Radardaten der Straßenverlauf gut nachgebildet werden kann.

Zu diesem korrigierten Fahrschlauch 15 wird nun ein zusätzlicher virtueller "Gegenverkehrskorridor" aufgespannt, das heißt, dass der Fahrschlauch 15 seitlich in Richtung der Gegenverkehrsfahrbahn 3 erweitert wird. Dieser "Gegenverkehrskorridor" 16 ist in Fig. 2 ebenfalls eingezeichnet, er ist - graphisch über die Linie 15a zum Fahrschlauch 15 und die Linie 16a - lateral begrenzt.

Insgesamt bildet sich also ein "Gesamtfahrschlauch" bestehend aus dem korrigierten Fahrschlauch 15 und dem Gegenverkehrsfahrschlauch 16 aus.

Nun wird anhand der Sensorsignale der Radarsensoren 8 bestimmt, ob sich ein Gegenverkehrsobjekt, hier das Gegenverkehrsfahrzeug 6, in diesem gemeinsamen Fahrschlauch befindet, oder nicht. Im gezeigten Fall gilt dies für das Gegenverkehrsobjekt 6, das heißt, dass sich dieses bereits im Fahrschlauch befindet, mithin also ein potentielles Kollisionsobjekt darstellen kann. Sofern also in diesem Szenario die beiden weiteren zentralen Kriterien, nämlich Erfassung einer Fahrbahnmarkierung und eine Drift des Fahrzeugs 4 zu dieser Fahrbahnmarkierung wie auch Erfassung einer Fahrerinaktivität positiv ermittelt werden, kann es zur Warnsignalgabe respektive zum Fahreingriff kommen.

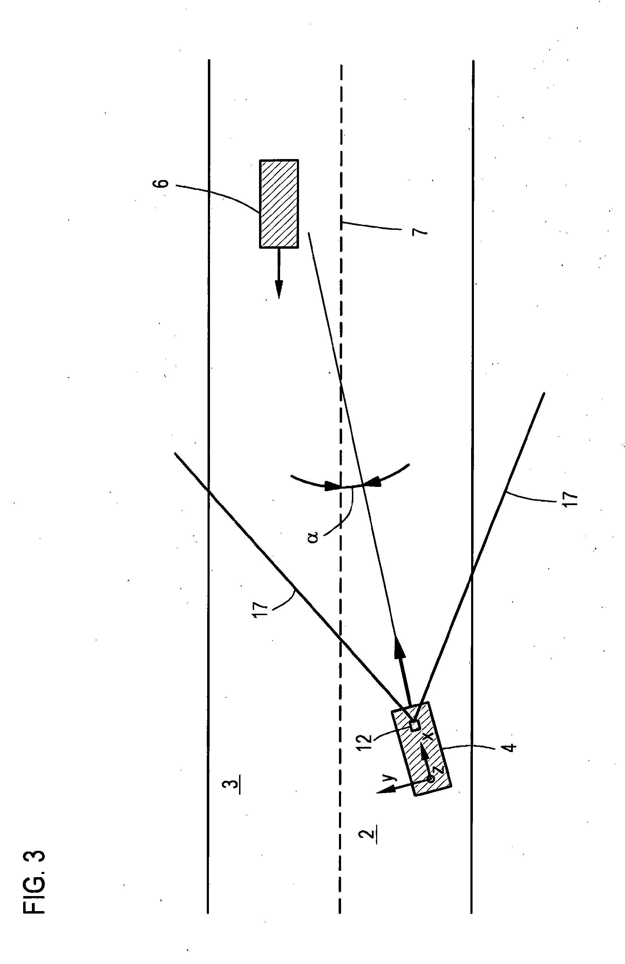

Die Ermittlung einer relevanten Fahrbahnmarkierung, die also definitiv die eigene Fahrspur 2 von der Gegenverkehrsfahrspur 3 trennt, also der Fahrbahnmarkierung 7, ist in Fig. 3 dargestellt. Gezeigt ist wiederum das eigene Fahrzeug 4 mit seiner optischen Erfassungseinrichtung, hier also der Kamera 12, die das Fahrzeugvorfeld erfasst. Der Erfassungsbereich ist über die beiden Linien 17 dargestellt. Durch eine geeignete Bildanalyseeinheit ist es nun möglich, die Fahrbahnmarkierung 7 innerhalb der einzelnen Videobilder zu erfassen. Diese Fahrbahnmarkierung 7 muss einerseits als eine solche klassifiziert werden, die tatsächlich die eigene Fahrbahn 2 von der Gegenverkehrsfahrbahn 3 abgrenzt, was gegebenenfalls auch gestützt auf Umfeldinformationen zu stehenden Objekten oder Informationen zu Gegenverkehrsobjekten und Ähnliches erfolgen kann. In jedem Fall ist es erforderlich, diese Fahrbahnmarkierung 7 für eine bestimmte Zeit stabil zu erfassen, wie auch sicherzustellen ist, dass der Lateralversatz des eigenen Fahrzeugs 4 zur Fahrbahnmarkierung 7, mithin also der Seitenversatz des Fahrzeugs 4 zu dieser Markierung 7, hinreichend stabil ist und keine Sprünge oder Aussetzer aufweist. Das heißt, dass das eigene Fahrzeug 4 für eine bestimmte Zeit innerhalb eines gewissen Toleranzbereichs stabil seitlich zu dieser Markierung 7 versetzt fährt. Hieraus kann abgeleitet werden, dass sich das eigene Fahrzeug 4 im Vorfeld einer etwaigen später erfassten Drift spurtreu bezüglich dieser relevanten Fahrbahnmarkierung 7 bewegt hat.

Zur Erfassung einer etwaigen Drift wird sodann das zeitliche Verhalten des eigenen Fahrzeugs 4 in Bezug auf die Fahrbahnmarkierung 7 ermittelt, mithin also, ob der Lateralversatz variiert respektive sich ein Gierwinkel zur Fahrbahnmarkierung 7 einstellt, wie im gezeigten Beispiel durch den Winkel α dargestellt ist. Dieser Gierwinkel α ist der Winkel, der sich zwischen der verlängerten Längsachse, im gezeigten Beispiel der x-Achse des Fahrzeugs 4, und dem Verlauf der Fahrbahnmarkierung 7 ergibt. Hieraus wird eine etwaige Drift abgeleitet, wie natürlich auch hierüber prädiziert werden kann, wann es zu einer Überfahrt der Markierung 7 kommt. Die y-Achse dient als Basis für die Ermittlung des Lateralversatzverlaufs, mithin also der Bestimmung der beschriebenen Spurtreue im Vorfeld einer etwaigen Drift.

Zur Ermittlung der Markierung 7 ist es möglich, Linienattribute heranzuziehen, die beispielsweise aus den Streckendaten einer Navigations-DVD zur befahrenen Fahrbahn abgegriffen werden können. Hieraus kann gegebenenfalls entnommen werden, wie die Fahrbahnmarkierung aussieht, ob es sich also beispielsweise um eine Landstraße handelt, bei der üblicherweise gestrichelte Markierungen vorgesehen sind, die in Bereichen mit Überholverbot unter Umständen durchgezogen sein können etc. Diese Informationen können im Rahmen der Ermittlung der relevanten Linie respektive Markierung dahingehend, ob die erfasste Markierung tatsächlich die eigene Fahrspur von einer Gegenverkehrsfahrspur trennt, berücksichtigt werden.

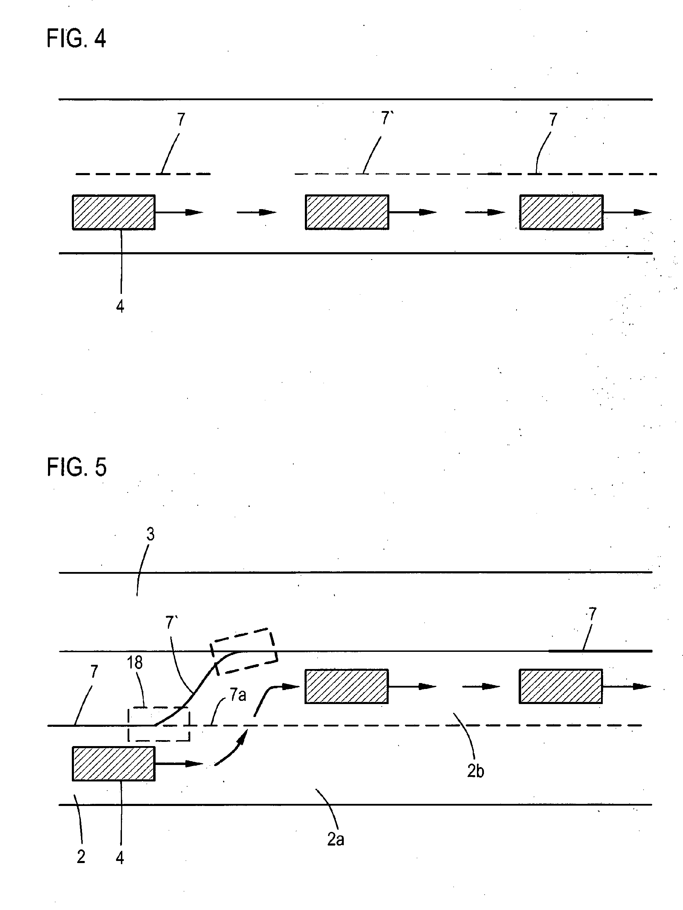

Wie beschrieben ist es zwingende Grundlage für eine etwaige Warnsignalgabe oder einen Eingriff, dass die relevante Fahrbahnmarkierung 7 hinreichend stabil und plausibel erfasst wird. Sie darf in keinem Fall unterbrochen werden respektive es darf keine Unsicherheit im Erfassungsergebnis vorliegen. Fig. 4 zeigt exemplarisch ein typisches Erfassungsszenario. Das Fahrzeug 4 fährt zunächst in einem Bereich, in dem die relevante Fahrbahnmarkierung 7 sicher erfasst wurde und als relevant virtuell "gekennzeichnet" ist, wie durch die etwas dickere Darstellung 7 angedeutet ist. Bei Fortsetzung der Fahrt bricht ersichtlich die Fahrbahnmarkierung 7 ab, sei es weil sie entweder nicht mehr vorhanden ist (z. B. infolge von Reparaturarbeiten), oder weil sie abgefahren ist und über die optische Erfassungssensorik keine sichere Detektion mehr möglich ist. Erst nach Fortsetzung der Fahrt wird erneut eine Fahrbahnmarkierung 7' erfasst, die grundsätzlich als relevante Fahrbahnmarkierung 7 beurteilt werden kann, jedoch, da noch nicht hinreichend stabil erfasst, noch nicht definitiv als eine solche zugrunde gelegt werden kann. Dies gelingt erst, wenn die Fahrbahnmarkierung 7' für eine vorbestimmte Zeitdauer kontinuierlich erfasst wird. Erst dann kann die Fahrbahnmarkierung 7' als relevant gut geprüft angesehen werden und als relevante Fahrbahnmarkierung 7 verwendet werden. Denn erst dann ist für ein bestimmtes Zeitfenster eine eindeutige Linienlage gegeben wie auch ein stabiler Fahrzustand des eigenen Fahrzeugs 4 (Spurtreue) ermittelt wurde. Die Fahrbahnmarkierung 7 ist, nachdem sie als relevant gut geprüft beurteilt wird, wiederum etwas stärker dargestellt.

Innerhalb des Zeitfensters begonnen vom Abbruch der Erfassung der Linie 7 bis zur erneuten Relevanz der Linie 7 ist das gesamte System inaktiv, eine etwaige Warnung ist, selbst wenn die anderen Randbedingungen erfüllt sind, grundsätzlich nicht möglich.

Fig. 5 zeigt schließlich ein Fahrbahnszenario, bei dem es ebenfalls zu einer Instabilität hinsichtlich der Fahrbahnmarkierungserfassung kommt. Ausgehend von dem Zustand, in dem das eigene Fahrzeug 4 spurtreu neben einer als relevant erfassten Fahrbahnmarkierung 7, die hinreichend stabil erfasst wird, fährt, kommt es im Bereich der eigenen Fahrspur 2 zu einer Spurerweiterung, das heißt, dass sich die eigene Fahrspur 2 in eine erste Fahrspur 2a und eine zweite Fahrspur 2b erweitert. Im Bereich der Fahrbahnmarkierung 7 kommt es zu einer Instabilität, wie Fig. 5 zeigt. Denn sie ändert einerseits ihre Richtung, wie durch die fortgesetzte Linie 7' dargestellt ist, andererseits kommt eine weitere Fahrbahnmarkierung 7a dazu, die die beiden Fahrspuren 2a, 2b voneinander nachfolgend trennt.

Das heißt, dass im Übergangsbereich eine Instabilität hinsichtlich der Fahrbahnmarkierung 7 bzw. 7' infolge des Linienführungswechsels vorliegt, also eine weitere Fahrbahnmarkierung 7a hinzukommt, so dass beginnend ab diesem Punkt keine eindeutige Linienlage mehr gegeben ist.

Um eine solche Uneindeutigkeit erfassen zu können, wird im Rahmen der Auswertung grundsätzlich ein Suchfenster 18 um die ursprünglich stabil erfasste Fahrbahnmarkierung 7 gelegt, das sich sowohl in Längsrichtung als auch lateral um die Fahrbahnmarkierung 7 erstreckt. Taucht eine Unstetigkeit in diesem Suchfenster 18 hinsichtlich der Fahrbahnmarkierung 7, wie durch den Verlauf der Markierung 7' dargestellt, auf, und/oder tritt auf einmal eine weitere Markierung, hier die Markierung 7a auf, so wird die ursprüngliche relevante Fahrbahnmarkierung 7 umgehend "gelöscht", wird also als nicht relevant behandelt, die Linienlage ist nicht mehr plausibel, das System ist nicht mehr betriebsbereit. Das Fahrzeug 4 setzt sodann seine Fahrt gemäß der Pfeile fort, wechselt also von der Fahrspur 2a auf die Fahrspur 2b. Kontinuierlich erfolgt die Überprüfung, ob eine Fahrbahnmarkierung erfasst wird. Da sich das Fahrzeug im Wesentlichen entlang der Fahrbahnmarkierung 7' bewegt, wird diese spätestens dann, wenn das Fahrzeug 4 auf die Fahrbahn 2b gewechselt ist und sich parallel zur Fahrbahnmarkierung 7' bewegt, wieder erfasst. Die Linienerfassung muss jedoch auch hier wiederum für ein vorbestimmtes Zeitfenster eindeutig sein, das heißt, die Fahrbahnmarkierung 7' muss wiederum hinreichend lang definiert erfasst werden, wie auch der Lateralversatz des eigenen Fahrzeugs zu dieser Linie hinreichend stabil sein muss. Erst wenn dies erfüllt ist, wird die Fahrbahnmarkierung 7' als wiederum relevante Fahrbahnmarkierung 7 bewertet, wie in Fig. 5 im rechten Bildteil dargestellt ist. Die Fahrbahnmarkierung 7 ist folglich als diejenige klassifiziert, die eindeutig die eigene Fahrspur 2b von der Gegenverkehrsfahrspur 3 trennt. Kommt es nun wiederum zu einer Gegenverkehrserfassung im hier nicht näher gezeigten Fahrschlauch und zu einer Inaktivitätserfassung, kann es wiederum zur Warnsignalgabe etc. kommen.

Das Kraftfahrzeug 4 verfügt selbstverständlich über eine geeignete Steuerungs- und Auswerteeinrichtung, die, in der Regel in Kommunikation mit änderen Steuereinrichtungen respektive Sensoreinrichtungen, die entsprechenden Datenverarbeitung vornimmt und die Einleitung entsprechender Handlungen, so erforderlich, anstößt.

## Patentansprüche

1. Verfahren zum Warnen des Fahrers eines Kraftfahrzeugs vor einer sich anbahnenden Gefahrensituation infolge eines unbeabsichtigten Driftens in Richtung einer oder auf eine Gegenverkehrsfahrspur,
**dadurch gekennzeichnet, dass**
- ein in Fahrtrichtung des eigenen Kraftfahrzeugs gerichteter virtueller Fahrschlauch bestimmt wird,
- unter Verwendung einer, insbesondere optischen, Erfassungssensorik eine die eigene Fahrspur von der Gegenverkehrsfahrspur trennende Fahrbahnmarkierung ermittelt wird,
- die Relativposition des eigenen Fahrzeugs zur Fahrbahnmarkierung ermittelt wird,
- unter Verwendung einer Erfassungssensorik, insbesondere einer Radarsensorik, ein etwaiges auf der Gegenverkehrsfahrspur fahrendes Gegenverkehrsfahrzeug ermittelt wird,
- eine Überprüfung erfolgt, ob das Gegenverkehrsfahrzeug in den virtuellen Fahrschlauch eindringen wird oder eingedrungen ist,
- eine Überprüfung erfolgt, ob das eigene Kraftfahrzeug aufgrund der gegebenen Relativposition zur Fahrbahnmarkierung diese überfahren wird oder überfahren hat,
- das Vorliegen oder Fehlen einer oder mehrerer Sensorinformationen, die einen aktiven Fahr-, insbesondere Lenkbetrieb des Fahrers und damit ein aktives Erreichen der erfassten Relativposition des Kraftfahrzeugs anzeigen, überprüft wird,
- und ein Warnsignal ausgegeben und/oder ein automatischer Fahrbetriebseingriff erfolgt, wenn die Überprüfungen ergeben haben, dass das Gegenverkehrsfahrzeug in den virtuellen Fahrschlauch eindringen wird oder eingedrungen ist und das eigene Fahrzeug die Fahrbahnmarkierung überfahren wird oder überfahren hat, so dass eine Kollision wahrscheinlich ist, und wenn die Sensorinformationen einen aktiven Lenkbetrieb des Fahrers ausschließen, wobei
- eine Warnung und/oder ein Eingriff nur dann erfolgt, wenn die die eigene Fahrspur von der Gegenverkehrsfahrspur trennende Fahrbahnmarkierung kontinuierlich über eine vorbestimmte, gegebenenfalls adaptierbare Zeitdauer erfasst wird und/oder
- eine Warnung und/oder ein Eingriff nur dann erfolgt, wenn innerhalb einer vorbestimmten oder adaptierbaren Zeitdauer keine nahe benachbart zur die eigene Fahrspur von der Gegenverkehrsfahrspur trennende Fahrbahnmarkierung liegende weitere Markierung erfasst wird.

2. Verfahren nach Anspruch 1,
**dadurch gekennzeichnet,**
**dass** der virtuelle Fahrschlauch, gegebenenfalls entfernungsgewichtet, lateral in Richtung der Gegenverkehrsfahrspur versetzt wird.

3. Verfahren nach Anspruch 1 oder 2,
**dadurch gekennzeichnet,**
**dass** der Fahrschlauch unter Berücksichtigung von anhand von, insbesondere mit der optischen Erfassungseinrichtung erfassten Umfeldinformationen zu stationären Umfeldobjekten, insbesondere Leitplanken oder Fahrspurmarkierungen, bestimmt wird.

4. Verfahren nach einem der vorangehenden Ansprüche,
**dadurch gekennzeichnet,**
**dass** zur Ermittlung, ob eine Kollision des eigenen Fahrzeugs mit dem Gegenverkehrsfahrzeug möglich ist, der Abstand zwischen den Fahrzeugen und wenigstens eine die Relativbewegung beider Fahrzeuge zueinander beschreibende Information, insbesondere die Relativgeschwindigkeit und/oder die Relativbeschleunigung, sowie vorhandene, die Eigenbewegung des eigenen Kraftfahrzeugs beschreibende Informationen erfasst und ein möglicher virtueller Aufprallzeitpunkt ermittelt wird.

5. Verfahren nach einem der vorangehenden Ansprüche,
**dadurch gekennzeichnet,**
**dass** der Moment des Überfahrens erfasst wird, wobei eine Warnung und/oder ein Eingriff erst ab diesem Moment möglich ist.

6. Verfahren einem der vorangehenden Ansprüche,
**dadurch gekennzeichnet,**
**dass** als Sensorinformation eine Betätigung eines Blinkers und/oder eines Fahr- oder Bremspedals oder eines Lenkrads, ein Lenkwinkel oder ein Lenkwinkelgradient oder ein Lenkmoment, ein Beschleunigungswert, eine innerhalb eines vorbestimmten, gegebenenfalls adaptierbaren Intervall liegende Ist-Fahrgeschwindigkeit, eine den Abstand zu einem vorausfahrenden Fahrzeug anzeigende Zeitlücke, und/oder eine mittels einer Kamera erfolgende Fahrerbeobachtung erfasste Information verwendet wird.

7. Verfahren nach einem der vorangehenden Ansprüche,
**dadurch gekennzeichnet,**
**dass** als weitere Information, in Abhängigkeit welcher die Gabe einer Warnung oder ein Eingriff erfolgt, ein anhand einer, insbesondere der optischen Erfassungseinrichtung ermittelter Kurvenradius der Fahrspur, ein zwischen einem definierten Minimum- und Maximumwert liegender Spurweitenwert und/oder die Ist-Geschwindigkeit des Gegenverkehrsfahrzeugs in Bezug auf einen Schwellwert berücksichtigt wird.

8. Verfahren nach einem der vorangehenden Ansprüche,
**dadurch gekennzeichnet,**
**dass** als weitere Information, in Abhängigkeit welcher die Gabe einer Warnung oder ein Eingriff erfolgt, eine Streckeninformation aus einer mitgeführten oder externen Datenbank, insbesondere eines Navigationssystems, berücksichtigt wird.

9. Verfahren nach einem der vorangehenden Ansprüche,
**dadurch gekennzeichnet,**
**dass** als Warnung eine optische, akustische und/oder haptische Warnung gegeben wird, und/oder dass als automatischer Eingriff ein Lenkmoment zurück in Richtung der eigenen Fahrspur oder ein radindividuelles Bremsmoment, das das Kraftfahrzeug in Richtung der eigenen Fahrspur führt, gegeben wird.

10. Verfahren nach Anspruch 9,
**dadurch gekennzeichnet,**
**dass** die Warnung und der Eingriff kaskadiert derart erfolgen, dass in der ersten Stufe eine optische und/oder akustische Warnung, in der zweiten Stufe eine haptische Warnung, in der dritten Stufe ein Lenkmoment und in der vierten Stufe ein Bremsmoment gegeben wird.

11. Verfahren nach Anspruch 10,
**dadurch gekennzeichnet,**
**dass** die jeweilige Stufe in Abhängigkeit der erfassten Gefahrensituation gewählt wird.

12. Kraftfahrzeug, ausgebildet zur Durchführung des Verfahrens nach einem der vorangehenden Ansprüchen.

## Claims

1. Method for warning the driver of a motor vehicle of an impending hazardous situation caused by accidental drifting towards or into a lane of oncoming traffic, **characterised in that**:
- a virtual vehicle path which is oriented in the direction of travel of the motor vehicle in question is determined,
- using an in particular optical detection sensor, a lane marker separating the lane in question from the lane of oncoming traffic is determined,
- the relative position of the motor vehicle in question in relation to the lane marker is determined,
- using a detection sensor, more particularly a radar sensor, any oncoming vehicle travelling in the lane of oncoming traffic is determined,
- a check is carried out as to whether the oncoming vehicle will enter or has entered the virtual vehicle path,
- a check is carried out as to whether the motor vehicle in question will cross or has crossed the lane marker based on the given relative position of said motor vehicle in relation thereto,
- the presence or absence of one or more items of sensor information indicating an active travel operation, more particularly a steering operation by the driver, and thus indicating that the detected relative position of the motor vehicle is reached as a result of driver activity, is checked and
- a warning signal is output and/or an automatic driving mode intervention is carried out when results of the checks indicate that the oncoming vehicle will enter or has entered into the virtual vehicle path and the vehicle in question will cross or has crossed the lane marker, thus making a collision likely, and when the sensor information rules out an active steering operation by the driver,
- a warning and/or intervention only being carried out when the lane marker separating the lane in question from the lane of oncoming traffic is continuously detected for a predetermined, optionally adjustable period of time and/or
- a warning and/or intervention only being carried out when no additional marker which is located closely adjacent to the lane marker separating the lane in question from the lane of oncoming traffic is detected within a predetermined or adjustable period of time.

2. Method according to claim 1, **characterised in that** the virtual vehicle path, which is optionally distance-weighted, is offset laterally towards the lane of oncoming traffic.

3. Method according to either claim 1 or claim 2, **characterised in that** the vehicle path is determined taking into account environment information relating to stationary surrounding objects, in particular crash barriers or lane markers, which information is detected on the basis of, in particular by means of the optical detection device.

4. Method according to any of the preceding claims, **characterised in that** in order to determine whether a collision of the vehicle in question with the oncoming vehicle is possible, the distance between the vehicles and at least one item of information describing the relative movement of the two vehicles with respect to one another, more particularly the relative speed and/or the relative acceleration, as well as existing information describing the movement of the vehicle in question are detected, and a possible virtual impact time is determined.

5. Method according to any of the preceding claims, **characterised in that** the moment of the crossing is detected, a warning and/or intervention being possible only from this moment onwards.

6. Method according to any of the preceding claims, **characterised in that** an actuation of a turn signal and/or of an accelerator or brake pedal or of a steering wheel, a steering angle or a steering angle gradient or a steering torque, an acceleration value, an actual driving speed within a predetermined, optionally adjustable interval, a time gap indicating the distance from a vehicle driving ahead, and/or information which is detected by means of an observation of the driver which is carried out using a camera is used as sensor information.

7. Method according to any of the preceding claims, **characterised in that** a curve radius of the lane which is determined using a, more particularly the, optical detection device, a lane width value between a defined minimum value and maximum value, and/or the actual speed of the oncoming vehicle with respect to a threshold value is taken into account as additional information on the basis of which a warning is output and/or an intervention is carried out.

8. Method according to any of the preceding claims, **characterised in that** route information from an onboard or external database, more particularly from a navigation system, is taken into account as additional information on the basis of which a warning is output or an intervention is carried out.

9. Method according to any of the preceding claims, **characterised in that** a visual, audible and/or haptic warning is output as a warning, and/or **in that** a steering torque is applied back towards the lane in question or a braking torque is applied to an individual wheel that drives the motor vehicle in the direction of the lane in question as an automatic intervention.

10. Method according to claim 9, **characterised in that** the warning and the intervention are carried out in a cascaded manner in such a way that in the first step, a visual and/or audible warning is output, in the second step, a haptic warning is output, in the third step, a steering torque is applied and in the fourth step, a braking torque is applied.

11. Method according to claim 10, **characterised in that** the respective steps are selected according to the detected hazardous situation.

12. Motor vehicle which is designed to carry out the method according to any of the preceding claims.

## Revendications

1. Procédé pour avertir le conducteur d'un véhicule automobile d'une situation dangereuse se préparant devant lui suite à un dérapage involontaire en direction d'une voie de circulation en sens inverse ou sur celle-ci,
**caractérisé en ce que**
- on détermine un corridor de circulation virtuel dirigé dans la direction de circulation du véhicule automobile considéré,
- en utilisant un dispositif de détection, notamment optique, on détermine un marquage de voie de circulation séparant la voie de circulation considérée de la voie de circulation en sens inverse,
- on détermine la position relative du véhicule considéré par rapport au marquage de voie de circulation,
- en utilisant un dispositif de détection, notamment un dispositif de radar, on détermine un éventuel véhicule en sens inverse circulant sur la voie de circulation en sens inverse,
- on effectue une vérification pour savoir si le véhicule en sens inverse va entrer ou est entré dans le corridor de circulation virtuel,
- on effectue une vérification pour savoir si le véhicule automobile considéré, en fonction de la position relative donnée par rapport au marquage de voie de circulation, va franchir ou a franchi celui-ci,
- on vérifie la présence ou l'absence d'une ou plusieurs informations de capteur qui indiquent une action de conduite, notamment de braquage, du conducteur et donc une action permettant d'atteindre la position relative détectée du véhicule automobile,
- et on émet un signal d'avertissement et/ou on effectue une intervention de conduite automatique lorsque les vérifications ont montré que le véhicule en sens inverse va entrer ou est entré dans le corridor de circulation virtuel et que le véhicule considéré va franchir ou a franchi le marquage de voie de circulation de sorte qu'une collision est probable et lorsque les informations de capteur excluent une action de braquage du conducteur,
- un avertissement et/ou une intervention n'étant effectué que si le marquage de voie de circulation séparant la voie de circulation considérée de la voie de circulation en sens inverse est détectée de façon continue sur une durée prédéterminée, éventuellement adaptable, et/ou
- un avertissement et/ou une intervention n'étant effectué que si, dans les limites d'une durée prédéterminée ou adaptable, on ne détecte pas de nouveau marquage situé à proximité du marquage de voie de circulation séparant la voie de circulation considérée de la voie de circulation en sens inverse.

2. Procédé selon la revendication 1, **caractérisé en ce que** le corridor de circulation virtuel est décalé latéralement, éventuellement avec une pondération suivant la distance, en direction de la voie de circulation en sens inverse.

3. Procédé selon la revendication 1 ou 2, **caractérisé en ce que** le corridor de circulation est déterminé en tenant compte d'informations d'environnement détectées notamment à l'aide du dispositif de détection optique et concernant des objets stationnaires dans l'environnement, notamment des glissières de sécurité ou des marquages de voie de circulation.

4. Procédé selon l'une des revendications précédentes, **caractérisé en ce que**, pour déterminer si une collision du véhicule considéré avec le véhicule en sens inverse est possible, la distance entre les véhicules et au moins une information décrivant le mouvement relatif des deux véhicules l'un par rapport à l'autre, notamment la vitesse relative et/ou l'accélération relative, ainsi que des informations existantes décrivant le mouvement propre du véhicule automobile considéré sont détectées et un possible instant de collision virtuel est déterminé.

5. Procédé selon l'une des revendications précédentes, **caractérisé en ce que** le moment du franchissement est détecté, un avertissement et/ou une intervention est possible seulement à partir de ce moment.

6. Procédé selon l'une des revendications précédentes, **caractérisé en ce que** l'on utilise comme information de capteur un actionnement d'un clignotant et/ou d'une pédale de d'accélération ou de freinage ou d'un volant de direction, un angle de braquage, un gradient d'angle de braquage ou un couple de braquage, une valeur d'accélération, une vitesse de marche réelle située à l'intérieur d'un intervalle prédéterminé, éventuellement adaptable, un intervalle de temps indiquant la distance à un véhicule circulant devant et/ou une observation de conducteur effectuée au moyen d'une caméra.

7. Procédé selon l'une des revendications précédentes, **caractérisé en ce que** l'on prend en compte comme autre information en fonction de laquelle l'émission d'un avertissement ou une intervention s'effectue un rayon de courbure de trajectoire de circulation déterminé à l'aide d'un dispositif de détection, notamment à l'aide du dispositif de détection optique, une valeur de largeur de trajectoire comprise entre une valeur minimale définie et une valeur maximale définie et/ou la vitesse réelle du véhicule en sens inverse par rapport à une valeur de seuil.

8. Procédé selon l'une des revendications précédentes, **caractérisé en ce que** l'on prend en compte comme autre information en fonction de laquelle l'émission d'un avertissement ou une intervention s'effectue une information de trajet provenant d'une base de données embarquée ou externe, notamment d'un système de navigation.

9. Procédé selon l'une des revendications précédentes, **caractérisé en ce que** l'on émet comme avertissement un avertissement optique, acoustique et/ou tactile et/ou **en ce que** l'on met en oeuvre comme intervention automatique un couple de braquage de retour dans la direction de la trajectoire propre du véhicule considéré ou un couple de freinage propre à chaque roue qui conduit le véhicule automobile dans la direction de sa propre trajectoire.

10. Procédé selon la revendication 9, **caractérisé en ce que** l'on effectue l'avertissement et l'intervention en cascade de telle sorte qu'un avertissement optique et/ou acoustique est émis dans la première étape, un avertissement tactile est émis dans la deuxième étape, un couple de braquage est mis en oeuvre dans la troisième étape et un couple de freinage est mis en oeuvre dans la quatrième étape.

11. Procédé selon la revendication 10, **caractérisé en ce que** l'étape respective est choisie en fonction de la situation à risque détectée.

12. Véhicule automobile, conçu pour la mise en oeuvre du procédé selon l'une des revendications précédentes.
